# EUROPEAN PATENT APPLICATION

(11) **EP 4 572 462 A1**
(43) Date of publication of application: **18.06.2025**
(21) Application number: 23851481.4
(22) Date of filing: 30.06.2023
(51) Int. Cl.: H04W 72/04

(54) **TIMING ADVANCE DETERMINATION METHOD, APPARATUS, TERMINAL AND NETWORK DEVICE**

(30) Priority: 12.08.2022 CN 202210970469
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); SHAN, Huiping, Beijing 100085 (CN); GAO, Xuejuan, Beijing 100085 (CN); XING, Yanping, Beijing 100085 (CN); LI, Shupeng, Beijing 100085 (CN)
(74) Representative: Studio Torta S.p.A.
(86) International application number: PCT/CN2023/104922
(87) International publication number: WO 2024/032254

(57) **Abstract**

Provided are a timing advance determination method, an apparatus, a terminal, and a network device. The method is applied to a terminal, and comprises: determining a target timing advance offset; and, according to the target timing advance offset, determining a first timing advance (TA) amount and a second TA amount, wherein the first TA amount is used for uplink transmission on a first uplink resource, the second TA amount is used for uplink transmission on a second uplink resource, the first uplink resource is a slot or symbol for an uplink subband, and the second uplink resource is a full-uplink slot or symbol in a bandwidth part (BWP)/carrier/frequency band range.

## Description

### CROSS-REFERENCE TO RELATED APPLICATION

This disclosure claims the priority of Chinese Patent Application No. 202210970469.2 filed in China on August 12, 2022, the disclosure of which are hereby incorporated by reference in its entirety.

### TECHNICAL FIELD

The present disclosure relates to the field of communications technologies, and in particular, to a timing advance determination method, a timing advance determination method apparatus, a terminal, and a network device.

### BACKGROUND

In order to solve the problems of coverage, delay and capacity of uplink transmission in a Time Division Duplex (TDD) mode, a research direction of a new radio (NR) of Release 18 will be non-overlapping subband full duplex, that is, the frequency domain resources are divided into a plurality of subbands and do not overlap with each other. The uplink and downlink frequency domain resources are respectively located in different subbands, and are also referred to as subband full-duplex.

### SUMMARY

An objective of the present disclosure is to provide a timing advance determination method and apparatus, a terminal, and a network device, to resolve a problem of inter-symbol interference on an uplink signal caused by a downlink signal in a subband in the related art.

In a first aspect, a method of determining a timing advance is provided. The method is performed by a terminal , and the method includes: determining a target timing advance offset; determining a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink sub-band, and the second uplink resource is a full-uplink slot or symbol in a bandwidth part (BWP) carrier/frequency band range.

Optionally, determining the first TA amount and the second TA amount according to the target timing advance offset includes: determining the first TA amount and the second TA amount according to the target timing advance offset and according to a timing advance command sent by the network device.

Optionally, the target timing advance offset includes: a first offset and a second offset, wherein the first offset is used to determine the first TA amount, and the second offset is used to determine the second TA amount; or a third offset, wherein the third offset is used to determine the first TA amount and the second TA amount.

Optionally, the first offset is less than or equal to a cyclic prefix length; or the first offset is equal to 0.

Optionally, in a case that the target timing advance offset includes the third offset, the method further includes: determining the first TA amount according to the third offset, the timing advance command, and a first determining manner; and determining the second TA amount according to the third offset, the timing advance command, and a second determining manner.

Optionally, when the third offset is non-zero, the first determination manner is *T*_{*TA_*1} *= N*_{*TA_*1} × *T_{c},* and the second determination manner is *T*_{*TA_*2} *=* (*N*_{*TA_*1} *+ N*_{*TA,offset_*3}) × *T_{c};* or, when the third offset is zero, the first determination manner is *T*_{*TA_*1} *=* (*N*_{*TA_*2} *- N*_{*TA,offset_*3}) × *T_{c},* and the second determination manner is *T*_{*TA_*2} *= N*_{*TA_*2} × *T_{c};* wherein *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

Optionally, a guard interval between the first uplink resource and the second uplink resource is greater than or equal to a first value, and the first value = (*N*_{*TA,offset_*2} *- N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the method of determining a timing advance further includes: switching pairs of uplink and downlink resource configurations according to a BWP pair or a sub-band pair; wherein the BWP pair includes a first bandwidth BWP where the uplink transmission is located and a second BWP where the downlink transmission is located, wherein a subcarrier spacing of the second BWP is less than or equal to a subcarrier spacing of the first BWP; the sub-band pair includes: a first sub-band where the uplink transmission is located and a second sub-band where the downlink transmission is located, wherein a subcarrier spacing of the second sub-band is less than or equal to a subcarrier spacing of the first sub-band.

In a second aspect, a method of determining a timing advance is provided. The method is performed by a network device. The method includes: determining a target timing advance offset; wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink sub-band, and the second uplink resource is a full-uplink slot or a symbol in a BWP/carrier/frequency band range.

Optionally, the target timing advance offset includes: a first offset and a second offset, wherein the first offset is used to determine a timing advance offset for receiving uplink transmission on the first uplink resource, and the second offset is used to determine a timing advance offset for receiving uplink transmission on the second uplink resource; or, a third offset, wherein the third offset is used to determine a timing advance offset for receiving uplink transmission on the first uplink resource and a timing advance offset for receiving uplink transmission on the second uplink resource.

Optionally, the first offset is less than or equal to a cyclic prefix length; or the first offset is equal to 0.

Optionally, when the third offset is non-zero, the timing advance amount indicated by the timing advance command does not include a timing advance offset; when the third offset is zero, the timing advance amount indicated by the timing advance command includes a timing advance offset.

Optionally, a guard interval between the first uplink resource and the second uplink resource is greater than or equal to a first value, and the first value *=*(*N*_{*TA,offset_*2} - *N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the method of determining a timing advance further includes: configuring pairs of uplink and downlink resources for a terminal by the network device according to a BWP pair, wherein the BWP pair includes a first bandwidth BWP where the uplink transmission is located and a second BWP where the downlink transmission is located, wherein a subcarrier spacing of the second BWP is less than or equal to a subcarrier spacing of the first BWP; or configuring pairs of uplink and downlink resources for a terminal by the network device according to a sub-band pair, wherein the sub-band pair includes: a first sub-band where the uplink transmission is located and a second sub-band where the downlink transmission is located, wherein a subcarrier spacing of the second sub-band is less than or equal to a subcarrier spacing of the first sub-band.

In a third aspect, a terminal is provided. The terminal includes: a transceiver, a memory, a processor, and a computer program stored on the memory and executable on the processor, wherein the processor is configured to read a program in a memory and perform the following processes: determining a target timing advance offset; determining a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink sub-band, and the second uplink resource is a full-uplink slot or symbol in a bandwidth part (BWP) carrier/frequency band range.

Optionally, the processor is further configured to read the computer program in the memory to perform the following process: determining the first TA amount and the second TA amount according to the target timing advance offset and according to a timing advance command sent by the network device.

Optionally, the target timing advance offset includes: a first offset and a second offset, wherein the first offset is used to determine the first TA amount, and the second offset is used to determine the second TA amount; or a third offset, wherein the third offset is used to determine the first TA amount and the second TA amount.

Optionally, the first offset is less than or equal to a cyclic prefix length; or the first offset is equal to 0.

Optionally, in a case that the target timing advance offset includes the third offset, the processor is further configured to read the computer program in the memory to perform the following process: determining the first TA amount according to the third offset, the timing advance command, and a first determining manner; determining the second TA amount according to the third offset, the timing advance command, and a second determining manner.

Optionally, when the third offset is non-zero, the first determination manner is *T*_{*TA_*1} *= N*_{*TA_*1} × *T_{c},* and the second determination manner is *T*_{*TA_*2} *=* (*N*_{*TA_*1} *+ N*_{*TA,offset_*3}) × *T_{c};* or, when the third offset is zero, the first determination manner is *T*_{*TA_*1} *=* (*N*_{*TA_*2} *- N*_{*TA,offset_*3}) × *T_{c},* and the second determination manner is *T*_{*TA_*2} *= N*_{*TA_*2} × *T_{c};* wherein *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

Optionally, a guard interval between the first uplink resource and the second uplink resource is greater than or equal to a first value, and the first value = (*N*_{*TA,offset_*2} - *N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the processor is further configured to read the computer program in the memory to perform the following process: switching between pairs of uplink and downlink resource configurations according to a BWP pair or a sub-band pair; wherein the BWP pair includes a first bandwidth part BWP where the uplink transmission is located and a second BWP where the downlink transmission is located, wherein a subcarrier spacing of the second BWP is less than or equal to a subcarrier spacing of the first BWP; the sub-band pair includes: a first sub-band where the uplink transmission is located and a second sub-band where the downlink transmission is located, wherein a subcarrier spacing of the second sub-band is less than or equal to a subcarrier spacing of the first sub-band.

In a fourth aspect, a network device is provided. The network device includes: a transceiver, a memory, a processor, and a computer program stored on the memory and executable on the processor, wherein the processor is configured to read the computer program in a memory and perform the following processes: determining a target timing advance offset; wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink sub-band, and the second uplink resource is a full-uplink slot or a symbol in a BWP/carrier/frequency band range.

Optionally, the target timing advance offset includes: a first offset and a second offset, wherein the first offset is used to determine a timing advance offset for receiving uplink transmission on the first uplink resource, and the second offset is used to determine a timing advance offset for receiving uplink transmission on the second uplink resource; or, a third offset, wherein the third offset is used to determine a timing advance offset for receiving uplink transmission on the first uplink resource and a timing advance offset for receiving uplink transmission on the second uplink resource.

Optionally, the first offset is less than or equal to a cyclic prefix length; or the first offset is equal to 0.

Optionally, when the third offset is non-zero, the timing advance amount indicated by the timing advance command does not include a timing advance offset; when the third offset is zero, the timing advance amount indicated by the timing advance command includes a timing advance offset.

Optionally, a guard interval between the first uplink resource and the second uplink resource is greater than or equal to a first value, and the first value *=*(*N*_{*TA,offset_*2} *- N*_{*TA,offset_*1}) × *T_{c};* wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the processor is further configured to read the computer program in the memory to perform the following process: configuring pairs of uplink and downlink resources for a terminal by the network device according to a BWP pair, wherein the BWP pair includes a first bandwidth part BWP where the uplink transmission is located and a second BWP where the downlink transmission is located, wherein a subcarrier spacing of the second BWP is less than or equal to a subcarrier spacing of the first BWP; or configuring pairs of uplink and downlink resources for a terminal by the network device according to a sub-band pair, wherein the sub-band pair includes: a first sub-band where the uplink transmission is located and a second sub-band where the downlink transmission is located, wherein a subcarrier spacing of the second sub-band is less than or equal to a subcarrier spacing of the first sub-band.

In a fifth aspect, an apparatus for determining a timing advance is provided. The apparatus is applied to a terminal, and the apparatus includes: a first determining module, configured to determine a target timing advance offset; a second determining module, configured to determine a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink sub-band, and the second uplink resource is a full-uplink slot or symbol in a bandwidth part (BWP) carrier/frequency band range.

In a sixth aspect, an apparatus for determining a timing advance is provided. The apparatus is applied to a network device, and the apparatus includes: a third determining module, configured to determine a target timing advance offset; wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink sub-band, and the second uplink resource is a full-uplink slot or a symbol in a BWP/carrier/frequency band range.

In a seventh aspect, a processor-readable storage medium is provided. The processor-readable storage medium stores a computer program, and the computer program is configured to cause a processor to perform the timing advance determination method according to the first aspect or the second aspect.

The above technical solution of the present disclosure has the following beneficial effects.

In the foregoing solution, the terminal determines the target timing advance offset, and determines the first timing advance TA amount and the second TA amount according to the target timing advance offset; and the terminal performs uplink transmission on the first uplink resource based on the first TA amount, and performs uplink transmission on the second uplink resource based on the second TA amount, where the first uplink resource is a slot or symbol of the uplink subband, and the second uplink resource is a full-uplink slot or symbol in a bandwidth part BWP carrier/frequency band range. In this way, the uplink transmission on the uplink subband and the uplink transmission on the full-uplink symbol respectively correspond to different timing advances, which can avoid the problem of inter-symbol interference caused by the downlink signal on the network device side to the uplink received signal, and improve the uplink receiving performance of the network device.

### BRIEF DESCRIPTION OF THE DRAWINGS

FIG. 1 is a first schematic diagram of a frame structure of a subband full duplex according to an embodiment of the present disclosure;
FIG. 2 is a first flowchart of a method of determining a timing advance according to an embodiment of the present disclosure;
FIG. 3 is a second schematic diagram of a frame structure of a subband full duplex according to an embodiment of the present disclosure;
FIG. 4 is a second flowchart of a method of determining a timing advance according to an embodiment of the present disclosure;
FIG. 5 is a first structural block diagram of an apparatus for determining a timing advance according to an embodiment of the present disclosure;
FIG. 6 is a second structural block diagram of an apparatus for determining a timing advance according to an embodiment of the present disclosure;
FIG. 7 is a schematic diagram of a hardware structure of a terminal according to an embodiment of the present disclosure;
FIG. 8 is a schematic diagram of a hardware structure of a network device according to an embodiment of the present disclosure.

### DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

The following first describes the content involved in the solutions provided in the embodiments of the present disclosure.

An uplink (Up Link, UL) timing advance *T_{TA} =* (*N_{TA} + N_{TA,offset}*) × *T_{c},*, where *N_{TA,offset}* is a cell-specific parameter, *N_{TA,offset}* is a timing advance offset, *N_{TA}* is an adjustment parameter parsed according to a timing advance command, and *T_{c}* is a basic time unit.

In order to reserve uplink and downlink conversion time for the base station and the user equipment (UE, also referred to as "terminal"), if the UE is not configured with radio resource control (RRC) signaling n-TimingAdvanceOffset and TDD frequency range 1 (frequency range 1, FR1), *N_{TA,offset}* is 25600 or 39939, and a value of corresponding uplink timing advance offset TAoffset (TAoffset=*N_{TA,offset}* × *T_{c}*) is 13us/20.3us ; When TDD FR2, *N_{TA,offset}* is 13792, and the corresponding TAoffset value is 7 us; if the base station sends RRC signaling n-TimingAdvanceOffset, *N_{TA,offset}* is 0/25600/39939, and the value of the corresponding TAoffset may be 0/13us/20.3us.

If the base station configures *N_{TA,offset}* of cell specific to 0 by using the RRC signaling n-TimingAdvanceOffset, that is, the uplink transmission on the UL subband and the uplink transmission on the full UL symbols both adopt *N_{TA,offset}=*0*,* and the base station has the following three implementations:
Implementation 1: when the base station side configures the uplink transmission on the UL subband and the *N*_{TA} of the uplink transmission on the full UL symbols, *N_{TA,offset}* values are added, so that *N*_{TA} includes *N_{TA,offset},* and transmission delay between the UE and the base station, so that *N*_{TA} in the related art indicates that the range of the transmission delay between the UE and the base station is reduced, and the corresponding supported cell radius is reduced. In addition, there is still a TAoffset timing difference between the uplink transmission and the downlink transmission on the UL subband on the base station side, so that the downlink signal can cause inter-symbol interference and inter-carrier interference to the uplink receiving signal, so the implementation of the base station cannot solve the inter-symbol interference and inter-carrier interference problems.
Implementation 2: if the base station side does not add *N_{TA,offset}* values when configuring the uplink transmission on the UL subband and the *N*_{TA} of the uplink transmission on the full UL symbol, that is, only considering transmission delay between the UE and the base station, the UE in the cell center will not have enough uplink and downlink conversion time since the transmission delay between the UE and the base station is close to 0, and in addition, there may also be some potential influence on UE implementation, in general, if the uplink transmission on the UL subband and the *N_{TA,offset}* of the uplink transmission on the full UL symbols are all configured to be 0, there is a backward compatibility problem.
Implementation 3: if the base station side does not add *N_{TA,offsett}* values when configuring the uplink transmission *N*_{TA} on the UL subband, and adds *N_{TA,offset}* values when the base station configures *N*_{TA} for uplink transmission on the full UL symbols, which causes that the timing advance (TA) adjustment range ( *N_{TA_new} = N_{TA_old}* + (*T_{A}* - 31) × 16 × 64/2*^{u}*, *T_{A}=*0*,* 1, 2, ..., 63) in the related art may not satisfy that N_{TA} is adjusted from including *N_{TA,offset}* to including *N_{TA,offset}* (the N_{TA} adjustment amount includes the sum of the change of the transmission delay caused by the motion and *N_{TA,offset}*)*,* when uplink transmission of UE being switched from the UL subband to full UL symbols. For example, the UE in one cell center moves to the edge of the base station in one timing adjustment period, and before the UE moves, uplink transmission is transmitted in the last slot corresponding to the UL subband, and needs to be switched to the full-uplink slot after moving, and the adjustment amount of *N*_{TA} needs to include: 2×cell radius/speed + *N_{TA,offset},* in this case, the foregoing adjustment amount cannot be implemented by *T_{A} =* 0, 1, 2, ..., 63 in the related art.

To sum up, the base station configures a cell-specific *N_{TA,offset}* to 0 by means of RRC signaling n-TimingAdvanceOffset, and there may be limitations mentioned in the foregoing implemenations.

If *N_{TA,offset}* is not configured to be 0, the value of TAoffset is greater than the normal cyclic prefix (CP) length supported by the related protocol (the maximum length of the normal CP supported by the related protocol is 5.2 us).

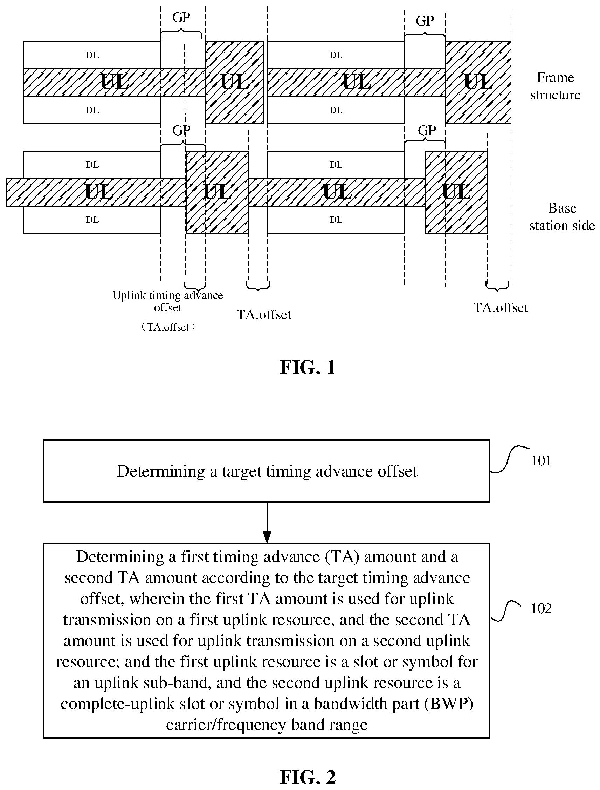

As shown in FIG. 1, since the base station transmits both the downlink signal and the uplink signal at the same time, it can be seen from the above analysis that if both the UL subband and the traditional UL symbols adopt a unified TAoffset configuration, the timing between the uplink and the downlink of the base station side exceeds the CP length, theoretically, inter-symbol interference and inter-carrier interference can be introduced, that is, the downlink interference of the base station to the uplink can be deteriorated.

Based on the foregoing, embodiments of the present disclosure provide a timing advance determination method and apparatus, a terminal, and a network device, to resolve a problem of inter-symbol interference caused by a downlink signal of a network device side to an uplink received signal.

Referring to FIG. 2, an embodiment of the present disclosure provides a method of determining a timing advance, which is applied to a terminal, and specifically includes the following steps.

Step 101: determining a target timing advance offset.

In an optional implementation, the terminal determines a target timing advance offset based on a protocol agreement; and the network device determines a target timing advance offset based on a same protocol agreement.

In another optional implementation, the network device determines a target timing advance offset; the terminal receives target timing advance offset information (for example, an index for a target timing advance offset) sent by the network device; and determines a target timing offset according to the target timing advance offset information. For example, the network device determines one of the values in the timing advance offset set predefined by the protocol as the target timing advance offset, and sends the determined target timing advance offset to the terminal.

Specifically, the terminal receives the target timing advance offset information sent by the network device through the RRC signaling.

It should be noted that the target timing advance offset is a fixed value that varies according to different frequency bands, and the value is usually a cell-specific parameter.

The target timing advance offset includes: a first offset and a second offset, where the first offset is used to determine a first TA amount, and the second offset is used to determine a second TA amount; or a third offset, where the third offset is used to determine the first TA amount and the second TA amount.

Step 102: determining a first timing advance (TA) amount and a second TA amount according to the target timing advance offset, where the first TA amount is used for uplink transmission on a first uplink resource, and the second TA amount is used for uplink transmission on a second uplink resource; and the first uplink resource is a slot or symbol of an uplink subband, and the second uplink resource is a full-uplink slot or symbol in a bandwidth part (BWP)/carrier/frequency band range.

It should be noted that the first uplink resource is a slot or symbol of a non-overlapping uplink subband, that is, the first uplink resource is used for uplink transmission in a non-overlapping subband full duplex (SBFD) symbol range; and the second uplink resource is a full-uplink slot or symbol in a bandwidth part (BWP) carrier/frequency band range, that is, the second uplink resource is used for uplink transmission on a traditional uplink symbol or slot.

Specifically, the uplink transmission on the first uplink resource and the uplink transmission on the second uplink resource include at least one of the following: a Physical Random Access Channel (PRACH), a Physical Uplink Control Channel (PUCCH), and a Physical Uplink Shared Channel (PUSCH).

In this step, the first TA amount and the second TA amount are determined according to the target timing advance offset. The first TA amount and the second TA amount may be different.

It should be noted that, when the configured timing advance is less than the uplink-downlink switching time length of the terminal, the network device needs to reserve the necessary hardware switching time for the terminal in a scheduling or configuration manner, for example, 13 us needs to be reserved for FR 1, and 7 µs needs to be reserved for FR 2-1.

In an embodiment of the present disclosure, the determining the first timing advance (TA) amount and the second TA amount according to the target timing advance offset includes: determining the first TA amount and the second TA amount according to the target timing advance offset and a timing advance command sent by the network device.

In this embodiment, the timing advance command is used to indicate to the terminal the TA information (for message 3 (Message 3, Msg 3)) or timing advance adjustment information (for uplink transmission after Msg3).

It should be noted that the TA value depends on the delay of signal transmission between the base station and the terminal, that is, different terminals at different positions have different TA values.

During specific implementation, the adjustment parameter N_{TA} can be determined based on the timing advance command, that is, the network device configures the corresponding T_{A} for different terminal through the timing advance commands to compensate for the transmission delay, ensures that the terminals at different positions in the cell reach the base station within the same time range (CP range).

Specifically, when Msg3 is sent, *N_{TA} = T_{A}* ×16 × 64/2*^{u}* , *T_{A}* is configured by a Medium Access Control (MAC) random access response (RAR), *T_{A}*= 0, 1, 2, ..., 3846; for uplink transmission after Msg3, *N_{TA_new} = N_{TA_old} +* (*T_{A}* - 31) × 16 × 64/2*^{u}*, where *T_{A}*=0, 1, 2, ..., 63; *T_{A}* is configured by a MAC Control Element (CE).

In the foregoing embodiment, the first TA amount and the second TA amount are determined according to the adjustment parameter N_{TA} determined according to the timing advance command and according to the target timing advance offset. The first TA amount and the second TA amount may be different.

In an optional implementation, the target timing advance offset includes the first offset and the second offset. In step 103, the determining the first TA amount and the second TA amount according to the target timing advance offset and the timing advance command includes: determining the first TA amount according to the first offset and the timing advance command; and determining the second TA amount according to the second offset and the timing advance command.

Specifically, the first TA amount is determined according to the formula *T*_{*TA_*1} *=* (*N_{TA} + N*_{*TA,offset_*1}) × *T_{c}*; the second TA amount is determined according to the formula *T*_{*TA_*2} = (*N_{TA} + N*_{*TA,offset_*2}) × *T_{c}*; where *T*_{*TA_*1} refers to a first TA amount, *T*_{*TA_*2} refers to a second TA amount, and *N_{TA}* is an adjustment parameter determined according to a timing advance command; *N*_{*TA,offset_*1} refers to the first offset, and *N*_{*TA,offset_*2} refers to the second offset; and *T_{c}* is a basic time unit. Specifically, *T_{c} =* 1/Δ*fₘₐₓ* · *N_{f} ,* where Δ*f*ₘₐₓ *=* 480 · 10³ Hz, *N_{f}* = 4096.

Optionally, in a specific embodiment of the present disclosure, the first offset is less than or equal to a cyclic prefix length; or, the first offset is equal to 0.

The specific content of the cyclic prefix is not limited.

Specifically, for a specific subcarrier spacing, the length of the cyclic prefix may be one of the following three values: 512*k* · 2*^{-µ}*, 144*k ·* 2*^{-µ}+*16*k,* 144*k* · *2^{-µ}.*

Wherein K = 64, A relationship between a value of µ and a subcarrier spacing is shown in Table 1 below. Δ***f*** = *2^{-µ}* · 15[KHz]

**TABLE 1. A relationship between a value of µ and a subcarrier spacing**

| *µ* | Δ***f*** = 2^{-*µ*} · 15[KHz] |
|---|---|
| 0 | 15 |
| 1 | 30 |
| 2 | 60 |
| 3 | 120 |
| 4 | 240 |

Specifically, a dedicated timing advance offset, that is, a first offset, may be separately configured for the uplink subband in a protocol agreement or RRC signaling manner, so that the first offset is less than or equal to the cyclic prefix length. Optionally, the first offset is equal to 0.

In the foregoing embodiment, the uplink transmission on the uplink subband may adopt timing advance offsets, for uplink transmission on uplink subbands, different from timing advance offsets for uplink transmission on the full-uplink symbols, for example, the timing advance offset used on the uplink subband is 0, and at this time, the uplink transmission received at the network device side and the downlink transmission sent by the network device side are aligned in time, so that the problem of inter-symbol interference of the uplink received signal caused by the downlink signal on the network device side can be avoided, and the uplink receiving performance of the network device is improved.

In another optional implementation, the target timing advance offset includes the third offset. In step 103, the determining the first TA amount and the second TA amount according to the target timing advance offset and the timing advance command includes: determining the first TA amount according to the third offset, the timing advance command, and the first determining manner; and determining the second TA amount according to the third offset, the timing advance command, and the second determining manner.

In a specific embodiment, when the third offset is non-zero, the first determination manner is *T*_{*TA_*1} *= N*_{*TA_*1} × *T_{c},* and the second determination manner is *T*_{*TA_*2} *=* (*N*_{*TA_*1} *+ N*_{*TA,offset_*3}) × *T_{c}.* Optionally, when the third offset is zero, the first determination manner is *T*_{*TA_*1} *=* (*N*_{*TA_*2} *- N*_{*TA,offset_*3}) × *T_{c}*, and the second determination manner is *T*_{*TA_*2} *= N*_{*TA_*2} × *T_{c}*;

*T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

Specifically, *T_{c} =* 1/Δ*fₘₐₓ* · *N_{f},* where Δ*f*ₘₐₓ *=* 480 · 10³, *N_{f} =* 4096.

It should be noted that when the third offset is non-zero, the timing advance indicated by the timing advance command does not include a timing advance offset; and when the third offset is zero, the timing advance indicated by the timing advance command includes a timing advance offset. That is, *N*_{*TA_*1} does not include a timing advance offset (third offset), and *N*_{*TA*_2} includes a timing advance offset (third offset).

In the above embodiment, when the third offset is non-zero, the timing advance offset corresponding to the uplink transmission on the uplink subband and the uplink transmission on the full-uplink symbol is configured to be non-zero, but the first TA amount determined according to the implementation 1 does not include the timing advance offset, so that the uplink transmission arriving at the base station side on the uplink subband is aligned/synchronized with the downlink of the base station side, thereby ensuring synchronization between uplink and downlink of the base station side, and solving the problem of inter-symbol interference. When the third offset is zero, the timing advance offset corresponding to the uplink transmission on the uplink subband and the uplink transmission on the full-uplink symbols is configured to be 0, but considering that the timing advance command sent by the base station to the terminal includes the timing advance offset, the terminal subtracts the timing advance offset when calculating the first TA amount, so that the uplink transmission arriving at the base station side on the uplink subband is aligned/synchronized with the downlink of the base station side, thereby ensuring synchronization during uplink and downlink of the base station side, and solving the problem of inter-symbol interference.

It should be noted that a traditional terminal that does not support full-duplex subbands cannot transmit on the uplink subband again.

An implementation of the third offset being non-zero is described below with reference to the following three examples.
Example 1: when the third offset is non-zero, when it is determined that the transmission of the PUSCH is located on the uplink subband, the timing advance is *T*_{*TA_*1} *= N*_{*TA_*1} × *T_{c},* and when it is determined that the transmission of the PUSCH is located in the full-uplink symbol, the timing advance is *T*_{*TA_*2} = (*N*_{*TA_*1} *+ N*_{*TA,offset_*3}) × *T_{c}.*
Example 2: when the third offset is non-zero, the terminal determines the timing advance as *T*_{*TA_*1} *= N*_{*TA_*1} × *T_{c}* or *T*_{*TA_*2} = (*N*_{*TA_*1} *+ N*_{*TA,offset_*3}) × *T_{c}* according to the dynamic or semi-static indication information.
Example 3: when the third offset is non-zero, when determining that the position of the uplink transmission is the time domain position corresponding to the uplink subband, the terminal determines that the timing advance is: *T*_{*TA_*1} *= N*_{*TA_*1} × *T_{c}*; when it is determined that the position of the uplink transmission is a traditional uplink symbol, the terminal determines that the timing advance is *T*_{*TA_*2} = (*N*_{*TA_*1} *+ N*_{*TA,offset_*3}) × *T_{c}.*

Based on the above example, when the third offset is non-zero, the timing advance is *T*_{*TA_*2} *=* (*N*_{*TA_*1} *+ N*_{*TA,offset_*3}) × *T_{c}* when the traditional terminal (not supporting subband full-duplex) transmits uplink data on the traditional full-uplink symbols, and therefore, the uplink transmission on the traditional uplink symbol on the base station side is earlier than the downlink transmission by *N*_{*TA,offset_*3} × *T_{c}* ; For the UE supporting the SBFD, the first TA amount determined according to the implementation 1 does not include a timing advance offset, that is, uplink transmission on the uplink subband does not perform timing advance offset, so that the uplink transmission arriving at the base station side on the uplink subband is aligned/synchronized with the downlink transmission of the base station side, thereby ensuring synchronization during uplink and downlink of the base station side, and solving the problem of inter-symbol interference

An implementation of the third offset being zero is described below with reference to the following three examples.
Example A: when the third offset is zero, when it is determined that the transmission of the PUSCH is located on the uplink subband, the timing advance is *T*_{*TA_*1} *=* (*N*_{*TA_*2} *- N*_{*TA,offset_*3}) × *T_{c},* and when it is determined that the transmission of the PUSCH is located in the full-uplink symbol, the timing advance is *T*_{*TA_*2} *= N*_{*TA_*2} × *T_{c}.*
Example B: when the third offset is zero, the terminal determines the timing advance according to the dynamic or semi-static indication information: *T_{TA_1} =* (*N*_{*TA_*2} *- N*_{*TA,offset_*3}) × *T_{c}* or *T*_{*TA_*2} *= N*_{*TA_*2} × *T_{c}.*
Example C: when the third offset is zero, when determining that the position of the uplink transmission is the time domain position corresponding to the uplink subband, the terminal determines that the timing advance is: *T_{TA_1} =* (*N*_{*TA_*2} *- N*_{*TA,offset_*3}) × *T_{c}*; When it is determined that the position where the uplink transmission is located is a traditional uplink symbol, it is determined that the timing advance is T_{*TA*_2} *= N*_{*TA_*2} × *T_{c}.*

Based on the foregoing example, when the third offset is zero, when the network device (for example, the base station) configures *N_{TA_2},* the network device (for example, the base station) enable *N_{TA,offset}* to be included in *N*_{*TA_*2}*.* During specific implementation, the network device may indicate, to the terminal using subband full-duplex, the *N_{TA,offset}* used when calculating *N*_{*TA_*2} , and accordingly, the terminal may determine the first TA amount of uplink transmission on the uplink subband through the implementation 1. Since the terminal subtracts the timing advance offset when calculating the first TA amount, the time at which the uplink transmission transmitted on the uplink subband arrives at the base station side and the downlink transmission on the base station side are aligned/synchronized, thereby ensuring that the uplink and downlink of the base station side are synchronous, and solving the problem of inter-symbol interference.

*N*_{*TA,offset_*3} is a predefined value or a value configured by RRC signaling. For example, when TDD FR 1 is predefined, *N*_{*TA,offset_*3} is 25600 or 39939; at TDD FR 2, *N*_{*TA,offset_*3} is 13792; for example, *N_{TA,offset}* is configured by RRC signaling to be 0 or 25600 or 39939.

Based on the above example, as the base station configures *N*_{*TA_*2} of all terminals, the same*N_{TA,offset}* is taken into account, so that the uplink transmission on the traditional full-uplink symbol on the network device side can be ensured to be time-advanced by *N*_{*TA,offset_*3} × *T_{c}* than the downlink transmission.

It should be noted that, in the foregoing optional embodiments, the first TA amount on the uplink subband may be different from the second TA above the full-uplink symbol, so that the uplink transmission on the full-uplink symbol may arrive at the base station when the uplink transmission on the uplink subband has not ended, that is, the problem of collision between the uplink transmissions may be caused.

Based on the above problems, optionally, in an embodiment of the present disclosure, a guard interval between the first uplink resource and the second uplink resource is greater than or equal to a first value, and the first value = (*N*_{*TA,oftset_*2} *- N*_{*TA,offset_*1}) × *T_{c}*;
where *N*_{*TA,offset_*1} refers to the first offset, *N*_{*TA,offset_*2} refers to the second offset, and *T_{c}* is a basic time unit.

Specifically, in order to solve the problem that collision between the uplink transmission on the full-uplink symbol and the uplink transmission on the uplink subband may generate a collision, the collision problem at the base station side may be avoided by setting the guard interval GP≥(*N*_{*TA,offset_*2} *- N*_{*TA,offset_*1}) × *T_{c}* between the first uplink resource and the second uplink resource when the first offset is less than the second offset.

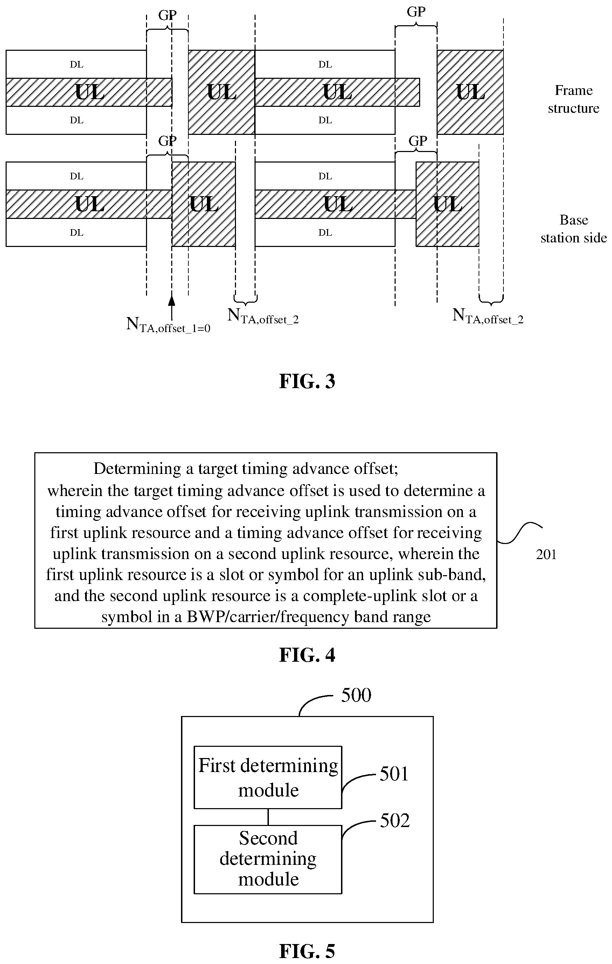

For example, as shown in FIG. 3, it can be understood that when *N*_{*TA,offset_*1} *=* 0, the guard interval GP is *N*_{*TA,offset_*2} × *T_{c}.*

In a specific example, the method of determining the timing advance includes the following steps.
step 1: the terminal determines, based on a protocol or based on an RRC signaling sent by a base station, that the target timing offset includes a first offset and a second offset, where the first offset is less than or equal to the cyclic prefix length; optionally, the first offset is 0,
step 2: the terminal determines, based on the first offset, a first TA amount corresponding to uplink transmission on the first uplink resource; and determines, based on the second offset, a second TA amount corresponding to uplink transmission on the second uplink resource; and
step 3: configuring a guard interval GP ≥ (second offset - first offset) × T_{c} between the first uplink resource and the second uplink resource, to avoid collision between uplink transmission on the first uplink resource and uplink transmission on the second resource.

In a specific example, the method of determining the timing advance includes the following steps:
step 1: the terminal determines that the target timing offset includes the third offset based on the protocol or based on the RRC signaling sent by the base station, and the third offset is zero;
step 2: the terminal determines, based on the third offset, a first TA amount corresponding to uplink transmission on the first uplink resource and a second TA amount corresponding to uplink transmission on the second uplink resource; and
   specifically, the first TA amount is determined according to *T*_{*TA_*1} *=* (*N*_{*TA_*2} *- N*_{*TA,offset_*3}) × *T_{c}*; the second TA amount is determined according to *T*_{*TA_*2} *= N*_{*TA_*2} × *T_{c}*;
   *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset;
step 3: configuring a guard interval GP ≥ (second offset - first offset) ×T_{C} between the first uplink resource and the second uplink resource, to avoid collision between uplink transmission on the first uplink resource and uplink transmission on the second resource.

In a specific example, the method of determining the timing advance includes the following steps:
step 1: the terminal determines that the target timing offset includes the third offset based on the protocol or the RRC signaling sent by the base station, and the third offset is non-zero;
step 2: the terminal determines, based on the third offset, a first TA amount corresponding to uplink transmission on the first uplink resource and a second TA amount corresponding to uplink transmission on the second uplink resource; and
   specifically, the first TA amount is determined according to *T*_{*TA_*1} *= N*_{*TA_*1} × *T_{c}*; the second TA amount is determined according to *T*_{*TA_*2} *=* (*N*_{*TA_*1} *+ N*_{*TA,offset_*3}) × *T_{c}*; *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset;
Step 3: configuring a guard interval GP ≥ (second offset - first offset) ×T_{C} between the first uplink resource and the second uplink resource, to avoid collision between uplink transmission on the first uplink resource and uplink transmission on the second resource.

Further, in an embodiment, the method of determining the timing advance further includes:
that the guard interval is a predefined guard interval in a frame format; or
that the guard interval is the predefined number of symbols; or
that the guard interval is the number of symbols associated with the subcarrier; or
that the guard interval is at least a part of a first time length, and the first time length is a flexible slot or a flexible symbol between the first uplink resource and the second uplink resource; or
that the guard interval is at least a part of a second time length, and the second time length is a time length between the first uplink resource and the second uplink resource.

For example, the guard interval between the uplink subband and the traditional uplink symbol is reserved by using the explicit frame format. For example, the explicit frame format is XXXSU, where X represents the slot corresponding to the subband full duplex, S includes the slot of the GP, U is the full-uplink slot, S = M: N: Q, where M + N + Q = 14, M, N and Q represent the number of uplink subbands, GP and the number of full-uplink symbols in one slot, respectively.

Exemplarily, the base station is reserved by configuring the F (flexible slot or flexible symbol), and the length of F in the protocol ≥ (*N*_{*TA,offset_*2} *- N*_{*TA,offset_*1}) × *T_{c}.*

For example, the time domain range of the uplink subband configured by the base station does not occupy the protection interval, to implement indirect reservation.

For example, for the above-mentioned guard interval reservation manner, 15kHz/30kHz/60kHz/120kHz, 1 symbol is reserved as a guard interval; 240kHz, 2 symbols are reserved as a guard interval; 480 kHz, 2/3/4 symbols are reserved as a guard interval; 960 kHz, 6 or 3 or 2 symbols are reserved as a guard interval.

Optionally, in an embodiment, in the first uplink resource, a subcarrier spacing of downlink transmission is less than or equal to a subcarrier spacing of uplink transmission.

The uplink transmission includes a PUCCH and/or a PUSCH.

In the foregoing embodiment, the interference problem between the uplink subcarrier and the downlink subcarrier on the network device side may be avoided by the case that the subcarrier spacing of the downlink transmission in the uplink subband is less than or equal to the subcarrier spacing of the uplink transmission.

Further, in a specific embodiment, the method further includes: configuring, by the terminal, pairs switch uplink and downlink resource configurations according to the BWP pairs or the subband pairs;

The BWP pair includes: a first bandwidth BWP where the uplink transmission is located and a second BWP where the downlink transmission is located, where a subcarrier spacing of the second BWP is less than or equal to a subcarrier spacing of the first BWP; the subband pair includes: a first subband where the uplink transmission is located and a second subband where the downlink transmission is located, where a subcarrier spacing of the second subband is less than or equal to a subcarrier spacing of the first subband.

In the foregoing embodiment, because the subcarrier spacing between the BWP pairs or the subband pairs is different, the interference problem between the uplink subcarrier and the downlink subcarrier can be avoided by the pairs of switching uplink and downlink resources configuration according to the BWP pairs or the subband pairs.

Referring to FIG. 4, an embodiment of the present disclosure provides a method of determining a timing advance, which is applied to a network device and includes the following steps.

Step 201: determining a target timing advance offset.

The target timing advance offset is used to determine a timing advance offset for receiving uplink transmission on a first uplink resource and a timing advance offset for receiving uplink transmission on a second uplink resource, wherein the first uplink resource is a slot or symbol for an uplink subband, and the second uplink resource is a full-uplink slot or a symbol in a BWP/carrier/frequency band range.

It should be noted that the first uplink resource is a slot or symbol of a non-overlapping uplink subband, that is, the first uplink resource is used for uplink transmission in a non-overlapping Subband Full Duplex (SBFD) symbol range; and the second uplink resource is a full-uplink slot or symbol in a bandwidth part BWP carrier/frequency band range, that is, the second uplink resource is used for a traditional uplink symbol or slot.

Specifically, the uplink transmission on the first uplink resource and the uplink transmission on the second uplink resource include at least one of the following: a Physical Random Access Channel (PRACH), a Physical Uplink Control Channel (PUCCH), and a Physical Uplink Shared Channel (PUSCH).

Further, optionally, the network device determines the target timing advance offset according to the protocol agreement, and the corresponding terminal also determines the target timing advance offset according to the same protocol agreement. Optionally, the network device determines, in the timing advance offset set predefined by the protocol, that one of the values is the target timing advance offset, and in this way, the network device needs to notify the terminal of the target timing advance offset. Optionally, the network device sends the target timing advance offset to the terminal through RRC signaling.

Specifically, the network device sends the target timing advance offset information (such as an index for the target timing advance offset) to the terminal, so that the terminal determines the target timing offset according to the target timing advance offset information.

It should be noted that the target timing advance offset is a fixed value that varies according to different frequency bands, and the value is usually a cell-specific parameter. The target timing advance offset includes: a first offset and a second offset, wherein the first offset is used to determine a timing advance offset for receiving uplink transmission on the first uplink resource, and the second offset is used to determine a timing advance offset for receiving uplink transmission on the second uplink resource; or, a third offset, wherein the third offset is used to determine a timing advance offset for receiving uplink transmission on the first uplink resource and a timing advance offset for receiving uplink transmission on the second uplink resource.

In a specific embodiment, the method further includes: sending a timing advance command to a terminal, wherein the terminal determines, according to the target timing advance offset and a timing advance command sent by the network device, a timing advance offset for receiving uplink transmission on the first uplink resource and a timing advance offset for receiving uplink transmission on the second uplink resource.

In the foregoing embodiment, the network device and the terminal device determine, according to the same protocol agreement, that the target timing advance offset or the network device sends the determined target timing advance offset information to the terminal, and the network device sends the timing advance command to the terminal, so that the terminal determines, according to the target timing advance offset and the adjustment parameter N_{TA} determined by the timing advance command, a timing advance offset (the first TA amount) for receiving the uplink transmission on the first uplink resource and a timing advance offset (the second TA amount) for receiving the uplink transmission on the second uplink resource. Optionally, the first TA amount and the second TA amount may be different.

In an optional implementation, the target timing advance offset includes the first offset and the second offset. The first offset is less than or equal to a cyclic prefix length; or, the first offset is equal to 0.

Specifically, a dedicated timing advance offset, that is, a first offset, may be separately configured for the uplink subband in a protocol agreement or in RRC signaling manner, so that the first offset is less than or equal to the cyclic prefix length. Optionally, the first offset is equal to 0.

The specific content of the cyclic prefix is not limited.

Specifically, for a specific subcarrier spacing, the length of the cyclic prefix may be one of the following three values: 512*k ·* 2^{-*µ*}, 144*k* · 2^{-*µ*}+16*k*, 144*k* · *2^{-µ}.* K = 64 and a relationship between a value of *µ* and a subcarrier spacing may be detailed in Table 1 in the terminal side embodiment. To avoid repetition, and details are not described herein again.

In the foregoing embodiment, the uplink transmission on the uplink sub-band may adopt timing advance offsets, for uplink transmission on uplink sub-bands, different from timing advance offsets for uplink transmission on the full-uplink symbols, and at this time, the uplink transmission received at the network device side and the downlink transmission sent by the network device side are aligned in time, so that the problem of inter-symbol interference of the uplink received signal caused by the downlink signal on the network device side can be avoided, and the uplink receiving performance of the network device is improved.

In another optional implementation, the target timing advance offset includes the third offset. When the third offset is non-zero, the timing advance amount indicated by the timing advance command does not include a timing advance offset; when the third offset is zero, the timing advance amount indicated by the timing advance command includes a timing advance offset.

In the foregoing embodiment, when the third offset is non-zero, the timing advance offsets corresponding to the uplink transmission on the uplink subband and the uplink transmission on the full-uplink symbols are configured to be non-zero, and the timing advance indicated by the timing advance command does not include the timing advance offsets ; when the third offset is zero, the timing advance offsets corresponding to the uplink transmission on the uplink subband and the uplink transmission on the full-uplink symbols are configured to be 0, and the timing advance indicated by the timing advance command includes the timing advance offsets.

It should be noted that, in the foregoing optional embodiments, the timing advance offset on the uplink subband may be different from the timing advance offset above the full-uplink symbols, and if there is no guard interval between the first uplink resource and the second uplink resource, the uplink transmission of the second uplink resource may arrive at the base station when the uplink transmission on the first uplink resource has not ended, that is, the uplink transmission on the full-uplink symbols may arrive at the base station when the uplink transmission of the uplink subband has not ended, which may cause a collision between the uplink transmissions.

Based on the above problems, optionally, in an embodiment of the present disclosure, a guard interval between the first uplink resource and the second uplink resource is greater than or equal to a first value, and the first value *=*(*N*_{*TA,offset_*2} - *N*_{*TA,offset_*1}) × *T_{c}*; wherein *N*_{*TA,offset_*1} is the first offset, *N*_{*TA,offset_*2} is the second offset, and *T_{c}* is a basic time unit.

Specifically, in order to solve the problem that the uplink transmission on the full-uplink symbols and the uplink transmission on the uplink subband may generate a collision, the collision problem at the base station side may be avoided by setting the guard interval GP≥ (*N*_{*TA,offset_*2} *- N*_{*TA,offset_*1}) × *T_{c}* between the first uplink resource and the second uplink resource when the first offset is less than the second offset.

Optionally, in an embodiment, the method of determining the timing advance further includes: that the guard interval is a predefined guard interval in a frame format; or that the guard interval is a predefined quantity of symbols; or that the guard interval is a quantity of symbols associated with a subcarrier; or that the guard interval is at least a part of a first time length, and the first time length is a flexible slot or a flexible symbol between the first uplink resource and the second uplink resource; or that the guard interval is at least a part of a second time length, and the second time length is a time length between the first uplink resource and the second uplink resource.

For example, the guard interval between the uplink sub-band and the traditional uplink symbol is reserved by using the explicit frame format. For example, the explicit frame format is XXXSU, where X represents the slot corresponding to the sub-band full duplex, S includes the slot of the GP, U is the full-uplink slot, S = M: N: Q, where M + N + Q = 14, M, N and Q represent the number of uplink sub-bands, GP and the number of full-uplink symbols in one slot, respectively.

Exemplarily, the base station is reserved by configuring the F (flexible slot or flexible symbol), and the length of F in the protocol ≥ (*N*_{*TA,offset_*2} *- N*_{*TA,offset_*1}) × *T_{c}.*

For example, the time domain range of the uplink sub-band configured by the base station does not occupy the protection interval, to implement indirect reservation.

For example, for the above-mentioned guard interval reservation manner, 15kHz/30kHz/60kHz/120kHz, 1 symbol is reserved as a guard interval; 240kHz, 2 symbols are reserved as a guard interval; 480 kHz, 2/3/4 symbols are reserved as a guard interval; 960 kHz, 6 or 3 or 2 symbols are reserved as a guard interval.

Optionally, in an embodiment, in the first uplink resource, a subcarrier spacing of downlink transmission is less than or equal to a subcarrier spacing of uplink transmission.

The uplink transmission includes a PUCCH and/or a PUSCH.

In the foregoing embodiment, the interference problem between the uplink subcarrier and the downlink subcarrier on the network device side may be avoided by the case that the subcarrier spacing of the downlink transmission in the uplink sub-band is less than or equal to the subcarrier spacing of the uplink transmission.

Further, in a specific embodiment, the method further includes: configuring pairs of uplink and downlink resources for the terminal by the network device according to BWP pairs, wherein the BWP pair includes a first bandwidth BWP where the uplink transmission is located and a second BWP where the downlink transmission is located, wherein a subcarrier spacing of the second BWP is less than or equal to a subcarrier spacing of the first BWP; or configuring pairs of uplink and downlink resources for a terminal by the network device according to a sub-band pair, wherein the sub-band pair includes: a first sub-band where the uplink transmission is located and a second sub-band where the downlink transmission is located, wherein a subcarrier spacing of the second sub-band is less than or equal to a subcarrier spacing of the first sub-band.

In the foregoing embodiment, because the subcarrier spacings between the BWP pairs or the sub-band pairs are different, the interference problem between the uplink subcarrier and the downlink subcarrier can be avoided by configuring uplink and downlink resources according to the BWP pairs or the sub-band pairs and causing that the subcarrier spacing of downlink transmission of the network device side is less than or equal to the subcarrier spacing of uplink transmission.

Further, configuration of the BWP pairs or the subband pairs take effect in a time domain range corresponding to the uplink subband.

Referring to FIG. 5, an embodiment of the present disclosure provides an apparatus 500 of determining a timing advance, the apparatus is applied to a terminal, and the apparatus 500 for determining a timing advance includes:
a first determining module 501, configured to determine a target timing advance offset; a second determining module 502, configured to determine a first timing advance (TA) amount and a second TA amount according to the target timing advance offset and a timing advance command, wherein the first TA amount is used for uplink transmission on a first uplink resource, and the second TA amount is used for uplink transmission on a second uplink resource; and the first uplink resource is a slot or symbol for an uplink sub-band, and the second uplink resource is a full-uplink slot or symbol in a bandwidth part (BWP) carrier/frequency band range.

Optionally, the second determining module 502 is specifically configured to: determine the first TA amount and the second TA amount according to the target timing advance offset and a timing advance command sent by the network device.

Optionally, the target timing advance offset includes: a first offset and a second offset, wherein the first offset is used to determine the first TA amount, and the second offset is used to determine the second TA amount; or a third offset, wherein the third offset is used to determine the first TA amount and the second TA amount.

Optionally, the first offset is less than or equal to a cyclic prefix length; or the first offset is equal to 0.

Optionally, in a case that the target timing advance offset includes the third offset, the second determining module 503 includes:
a first determining submodule, configured to determine the first TA amount according to the third offset, the timing advance command, and a first determining manner; and a second determining submodule, configured to determine the second TA amount according to the third offset, the timing advance command, and a second determining manner.

Optionally, when the third offset is non-zero, the first determination manner is *T*_{*TA_*1} *= N*_{*TA_*1} × *T_{c},* and the second determination manner is *T*_{*TA_*2} *=* (*N*_{*TA_*1} *+ N*_{*TA,offset_*3}) × *T_{c}*; or, when the third offset is zero, the first determination manner is *T*_{*TA_*1} *=* (*N*_{*TA_*2} *- N*_{*TA,offset_*3}) × *T_{c},* and the second determination manner is *T*_{*TA_*2} = *N*_{*TA_*2} × *T_{c}*; wherein *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

Optionally, a guard interval between the first uplink resource and the second uplink resource is greater than or equal to a first value, and the first value = (*N*_{*TA,offset_*2} *- N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the apparatus 500 of determining the timing advance further includes: a resource switching module, configured to switch pairs of uplink and downlink resource configurations according to BWP pairs or sub-band pairs; wherein the BWP pair includes a first bandwidth BWP where the uplink transmission is located and a second BWP where the downlink transmission is located, wherein a subcarrier spacing of the second BWP is less than or equal to a subcarrier spacing of the first BWP; the sub-band pair includes: a first sub-band where the uplink transmission is located and a second sub-band where the downlink transmission is located, wherein a subcarrier spacing of the second sub-band is less than or equal to a subcarrier spacing of the first sub-band.

It should be noted that, the above apparatus provided in the embodiments of the present disclosure can implement all method steps implemented by the method embodiments on the terminal side, and can achieve the same technical effect, and details of the same parts and beneficial effects as those in the method embodiments in this embodiment are not described herein again.

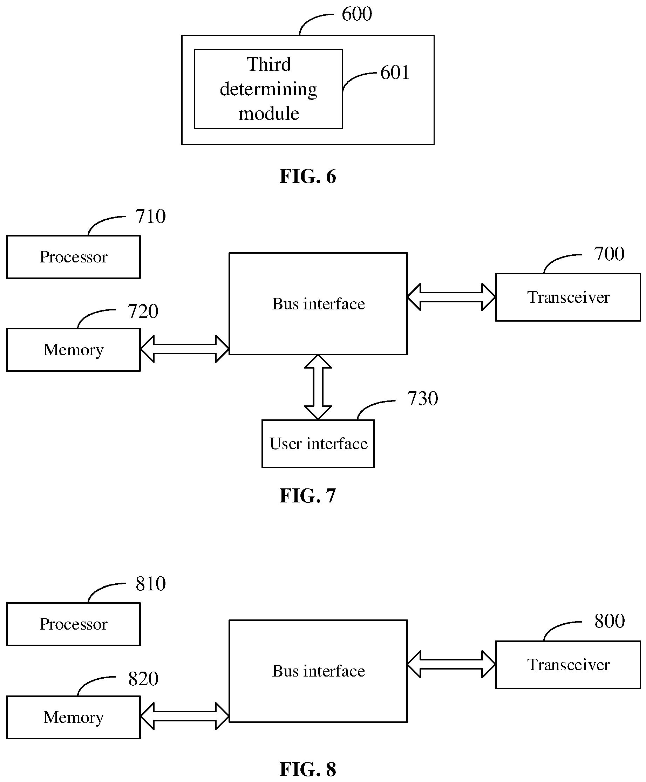

Referring to FIG. 6, an embodiment of the present disclosure provides an apparatus 600 of determining a timing advance, applied to a network device, and the apparatus 600 of determining a timing advance includes:
a third determining module 601, configured to determine a target timing advance offset; wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink sub-band, and the second uplink resource is a full-uplink slot or a symbol in a BWP/carrier/frequency band range.

Optionally, the target timing advance offset includes: a first offset and a second offset, wherein the first offset is used to determine a timing advance offset for receiving uplink transmission on the first uplink resource, and the second offset is used to determine a timing advance offset for receiving uplink transmission on the second uplink resource; or, a third offset, wherein the third offset is used to determine a timing advance offset for receiving uplink transmission on the first uplink resource and a timing advance offset for receiving uplink transmission on the second uplink resource.

Optionally, the first offset is less than or equal to a cyclic prefix length; or the first offset is equal to 0.

Optionally, when the third offset is non-zero, the timing advance amount indicated by the timing advance command does not include a timing advance offset; when the third offset is zero, the timing advance amount indicated by the timing advance command includes a timing advance offset.

Optionally, a guard interval between the first uplink resource and the second uplink resource is greater than or equal to a first value, and the first value *=*(*N*_{*TA,offset_*2} *- N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the apparatus 600 of determining the timing advance further includes: a first configuration module, configured to configure pairs of uplink and downlink resources for a terminal according to a BWP pair, wherein the BWP pair includes a first bandwidth BWP where the uplink transmission is located and a second BWP where the downlink transmission is located, wherein a subcarrier spacing of the second BWP is less than or equal to a subcarrier spacing of the first BWP; or a second configuration module, configured to configure pairs of uplink and downlink resources for a terminal according to a sub-band pair, wherein the sub-band pair includes: a first sub-band where the uplink transmission is located and a second sub-band where the downlink transmission is located, wherein a subcarrier spacing of the second sub-band is less than or equal to a subcarrier spacing of the first sub-band.

It should be noted that, the above apparatus provided in the embodiments of the present disclosure can implement all method steps implemented by the method embodiments on the network device side, and can achieve the same technical effect, and details of the same parts and beneficial effects as those in the method embodiments are not described herein again in this embodiment.

Referring to FIG. 7, an embodiment of the present disclosure provides a terminal, including: a processor 710; and a memory 720 connected to the processor 710 through a bus interface, where the memory 720 is configured to store a program and data used by the processor 510 when performing an operation, and the processor 710 invokes and executes the program and data stored in the memory 720. The transceiver 700 is connected to the bus interface, and is configured to receive and send data under the control of the processor 710; and the processor 710 is configured to read a program in the memory 720 to perform the following processes: determining a target timing advance offset; determining a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink sub-band, and the second uplink resource is a full-uplink slot or symbol in a bandwidth part (BWP) carrier/frequency band range

Optionally, the processor 710 is configured to read a program in the memory 720 to perform the following processes: determining the first TA amount and the second TA amount according to the target timing advance offset and according to a timing advance command sent by the network device.

Optionally, the target timing advance offset includes: a first offset and a second offset, wherein the first offset is used to determine the first TA amount, and the second offset is used to determine the second TA amount; or a third offset, wherein the third offset is used to determine the first TA amount and the second TA amount.

Optionally, the first offset is less than or equal to a cyclic prefix length; or the first offset is equal to 0.

Optionally, in a case that the target timing advance offset includes the third offset, the processor 710 is further configured to read a program in the memory 720 to perform the following process: determining the first TA amount according to the third offset, the timing advance command, and a first determining manner; and determining the second TA amount according to the third offset, the timing advance command, and a second determining manner.

Optionally, when the third offset is non-zero, the first determination manner is *T*_{*TA_*1} *= N*_{*TA_*1} × *T_{c},* and the second determination manner is *T*_{*TA_*2} *=* (*N*_{*TA_*1} *+ N*_{*TA,offset_*3}) × *T_{c}*; or, when the third offset is zero, the first determination manner is *T*_{*TA_*1} *=* (*N*_{*TA_*2} *- N*_{*TA,offset_*3}) × *T_{c},* and the second determination manner is *T*_{*TA_*2} *= N*_{*TA_*2} × *T_{c}*; wherein *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

Optionally, a guard interval between the first uplink resource and the second uplink resource is greater than or equal to a first value, and the first value = (*N*_{*TA,offset_*2} *- N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the processor 710 is further configured to read a program in the memory 720 to perform the following processes: switching pairs of uplink and downlink resource configurations according to a BWP pair or a sub-band pair; wherein the BWP pair includes a first bandwidth BWP where the uplink transmission is located and a second BWP where the downlink transmission is located, wherein a subcarrier spacing of the second BWP is less than or equal to a subcarrier spacing of the first BWP; the sub-band pair includes: a first sub-band where the uplink transmission is located and a second sub-band where the downlink transmission is located, wherein a subcarrier spacing of the second sub-band is less than or equal to a subcarrier spacing of the first sub-band.

In FIG. 7, the bus architecture may include any number of interconnected buses and bridges, and specifically, various circuits of one or more processors represented by the processor 710 and a memory represented by the memory 720 are linked together. The bus architecture may also link various other circuits, such as a peripheral device, a voltage regulator, and a power management circuit, which are well known in the art, and therefore are not further described herein. The bus interface provides an interface. The transceiver 700 may be a plurality of elements, including a transmitter and a receiver, and provides units for communicating with various other apparatuses on a transmission medium, where the transmission mediums include transmission media such as a wireless channel, a wired channel, and an optical cable. For different user equipment, the user interface 730 may also be an interface capable of being externally connected to the internal required device, and the connected device includes but is not limited to a keypad, a display, a speaker, a microphone, a joystick, and the like.

The processor 710 is responsible for managing the bus architecture and general processing, and the memory 720 may store data used by the processor 510 when performing operations.

Optionally, the processor 710 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor invokes the computer program stored in the memory, and is configured to perform any one of the methods provided in the embodiments of the present disclosure according to the obtained executable instruction. The processor and the memory may also be physically separated.

Referring to FIG. 8, an embodiment of the present disclosure provides a network device, including: a processor 810; and a memory 820 connected to the processor 810 through a bus interface, where the memory 820 is configured to store a program and data used by the processor 810 when performing an operation, and the processor 810 invokes and executes the program and data stored in the memory 820.

The transceiver 800 is connected to the bus interface, and is configured to receive and send data under the control of the processor 810; and the processor 810 is configured to read the program in the memory 820 to perform the following processes: determining a target timing advance offset; wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink sub-band, and the second uplink resource is a full-uplink slot or a symbol in a BWP/carrier/frequency band range.

Optionally, the target timing advance offset includes: a first offset and a second offset, wherein the first offset is used to determine a timing advance offset for receiving uplink transmission on the first uplink resource, and the second offset is used to determine a timing advance offset for receiving uplink transmission on the second uplink resource; or, a third offset, wherein the third offset is used to determine a timing advance offset for receiving uplink transmission on the first uplink resource and a timing advance offset for receiving uplink transmission on the second uplink resource.

Optionally, the first offset is less than or equal to a cyclic prefix length; or the first offset is equal to 0.

Optionally, when the third offset is non-zero, the timing advance amount indicated by the timing advance command does not include a timing advance offset; when the third offset is zero, the timing advance amount indicated by the timing advance command includes a timing advance offset.

Optionally, a guard interval between the first uplink resource and the second uplink resource is greater than or equal to a first value, and the first value *=*(*N*_{*TA,offset_*2} *- N*_{*TA,offset_*1}) × *T_{c}*; wherein *N*_{*TA,offset_*1} is the first offset, *N*_{*TA,offset_*2} is the second offset, and *T_{c}* is a basic time unit.

Optionally, the guard interval is a predefined guard interval in a frame format; or the guard interval is a predefined quantity of symbols; or the guard interval is a quantity of symbols associated with a subcarrier; or the guard interval is at least a part of a first time length, and the first time length is a flexible slot or a flexible symbol between the first uplink resource and the second uplink resource; or the guard interval is at least a part of a second time length, and the second time length is a time length between the first uplink resource and the second uplink resource.

Optionally, in the first uplink resource, a subcarrier spacing of downlink transmission is less than or equal to a subcarrier spacing of uplink transmission.

Optionally, the processor 810 is further configured to read a program in the memory 820 to perform the following processes:
configuring pairs of uplink and downlink resources for a terminal according to a BWP pair, wherein the BWP pair includes a first bandwidth BWP where the uplink transmission is located and a second BWP where the downlink transmission is located, wherein a subcarrier spacing of the second BWP is less than or equal to a subcarrier spacing of the first BWP; or configuring pairs of uplink and downlink resources for a terminal according to a sub-band pair, wherein the sub-band pair includes: a first sub-band where the uplink transmission is located and a second sub-band where the downlink transmission is located, wherein a subcarrier spacing of the second sub-band is less than or equal to a subcarrier spacing of the first sub-band.

In FIG. 8, the bus architecture may include any number of interconnected buses and bridges, and specifically, various circuits of one or more processors represented by the processor 810 and a memory represented by the memory 820 are linked together. The bus architecture may also link various other circuits, such as a peripheral device, a voltage regulator, and a power management circuit, which are well known in the art, and therefore are not further described herein. The bus interface provides an interface. The transceiver 800 may be a plurality of elements, including a transmitter and a receiver, and provides units for communicating with various other apparatuses on a transmission medium, where the transmission mediums include transmission media such as a wireless channel, a wired channel, and an optical cable. The processor 810 is responsible for managing the bus architecture and general processing, and the memory 820 may store data used by the processor 810 when performing operations.

The processor 810 may be a CPU, an ASIC, an FPGA, or a CPLD, and the processor may alternatively use a multi-core architecture.

The present disclosure further provides a processor-readable storage medium, where the processor-readable storage medium stores a computer program, and the computer program is configured to cause the processor to perform the steps of the method of determining a timing advance at a terminal side or a network device side.

The processor-readable storage medium may be any usable medium or data storage device accessible by a processor, including but not limited to a magnetic memory (for example, a floppy disk, a hard disk, a magnetic tape, a magneto-optical disk (DVD), a Blu-ray disk (CD), a Digital Versatile Disk (DVD), a Blu-ray Disk (BD), a High-Definition Versatile Disk (EPROM), an Electrically EPROM (EEPROM), a non-volatile memory (NAND Flash), a Solid State Disk (Solid State Disk or Solid State Drive, SSD), etc.).

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A method of determining a timing advance, the method being performed by a terminal, and the method comprising:
determining a target timing advance offset;
determining a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink subband, and the second uplink resource is a full-uplink slot or symbol in a bandwidth part (BWP) carrier/frequency band range.

2. The method of determining a timing advance according to claim 1, wherein determining the first TA amount and the second TA amount according to the target timing advance offset comprises:
determining the first TA amount and the second TA amount according to the target timing advance offset and according to a timing advance command sent by the network device.

3. The method of determining a timing advance according to claim 2, wherein the target timing advance offset comprises:
a first offset and a second offset, wherein the first offset is used to determine the first TA amount, and the second offset is used to determine the second TA amount; or
a third offset, wherein the third offset is used to determine the first TA amount and the second TA amount.

4. The method of determining a timing advance according to claim 3, wherein the first offset is less than or equal to a cyclic prefix length; or the first offset is equal to 0.

5. The method of determining a timing advance according to claim 3, wherein in a case that the target timing advance offset comprises the third offset, determining the first TA amount and the second TA amount according to the target timing advance offset and according to the timing advance command comprises:
determining the first TA amount according to the third offset, the timing advance command, and a first determining manner; and
determining the second TA amount according to the third offset, the timing advance command, and a second determining manner.

6. The method of determining a timing advance according to claim 5, wherein
when the third offset is non-zero, the first determination manner is *T*_{*TA_*1} *= N*_{*TA_*1} × *T_{c}*, and the second determination manner is *T*_{*TA_*2} *=* (*N*_{*TA_*1} *+ N*_{*TA,offset_*3}) × *T_{c}*;
or,
when the third offset is zero, the first determination manner is *T*_{*TA_*1} *=* (*N*_{*TA_*2} *- N*_{*TA,offset_*3}) × *T_{c},* and the second determination manner is *T*_{*TA_*2} *= N*_{*TA_*2} × *T_{c}*;
wherein *T*_{*TA_*1} is the first TA amount, *T*_{*TA_*2} is the second TA amount, *N*_{*TA_*1} and *N*_{*TA_*2} are adjustment parameters determined according to the timing advance command, *T_{c}* is a basic time unit, and *N*_{*TA,offset_*3} is the third offset.

7. The method of determining a timing advance according to claim 4, wherein a guard interval between the first uplink resource and the second uplink resource is greater than or equal to a first value, and the first value = (*N*_{*TA,offset_*2} - *N*_{*TA,offset_*1}) × *T_{c}*;
wherein *N*_{*TA,offset_*1} is the first offset, *N*_{*TA,offset_*2} is the second offset, and *T_{c}* is a basic time unit.

8. The method of determining a timing advance according to claim 7, wherein:
the guard interval is a predefined guard interval in a frame format; or
the guard interval is a predefined quantity of symbols; or
the guard interval is a quantity of symbols associated with a subcarrier; or
the guard interval is at least a part of a first time length, and the first time length is a flexible slot or a flexible symbol between the first uplink resource and the second uplink resource; or
the guard interval is at least a part of a second time length, and the second time length is a time length between the first uplink resource and the second uplink resource.

9. The method of determining a timing advance according to any one of claims 1 to 8, wherein in the first uplink resource, a subcarrier spacing of downlink transmission is less than or equal to a subcarrier spacing of uplink transmission.

10. The method of determining a timing advance according to claim 9, further comprising:
switching pairs of uplink and downlink resource configurations according to a BWP pair or a subband pair;
wherein the BWP pair comprises a first bandwidth BWP where the uplink transmission is located and a second BWP where the downlink transmission is located, wherein a subcarrier spacing of the second BWP is less than or equal to a subcarrier spacing of the first BWP;
the subband pair comprises: a first subband where the uplink transmission is located and a second subband where the downlink transmission is located, wherein a subcarrier spacing of the second subband is less than or equal to a subcarrier spacing of the first subband.

11. A method of determining a timing advance, the method being performed by a network device, the method comprising:
determining a target timing advance offset;
wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink subband, and the second uplink resource is a full-uplink slot or a symbol in a BWP/carrier/frequency band range.

12. The method of determining a timing advance according to claim 11, wherein the target timing advance offset comprises:
a first offset and a second offset, wherein the first offset is used to determine a timing advance offset for receiving uplink transmission on the first uplink resource, and the second offset is used to determine a timing advance offset for receiving uplink transmission on the second uplink resource;
or,
a third offset, wherein the third offset is used to determine a timing advance offset for receiving uplink transmission on the first uplink resource and a timing advance offset for receiving uplink transmission on the second uplink resource.

13. The method of determining a timing advance according to claim 12, wherein
the first offset is less than or equal to a cyclic prefix length; or
the first offset is equal to 0.

14. The method of determining a timing advance according to claim 12, wherein
when the third offset is non-zero, the timing advance amount indicated by the timing advance command does not comprise a timing advance offset;
when the third offset is zero, the timing advance amount indicated by the timing advance command comprises a timing advance offset.

15. The method of determining a timing advance according to claim 13, wherein a guard interval between the first uplink resource and the second uplink resource is greater than or equal to a first value, and the first value *=* (*N*_{*TA,offset_*2} *- N*_{*TA,offset_*1}) × *T_{c}*;
wherein *N*_{*TA,offset_*1} is the first offset, *N*_{*TA,offset_*2} is the second offset, and *T_{c}* is a basic time unit.

16. The method of determining a timing advance according to claim 15, wherein:
the guard interval is a predefined guard interval in a frame format; or
the guard interval is a predefined quantity of symbols; or
the guard interval is a quantity of symbols associated with a subcarrier; or
the guard interval is at least a part of a first time length, and the first time length is a flexible slot or a flexible symbol between the first uplink resource and the second uplink resource; or
the guard interval is at least a part of a second time length, and the second time length is a time length between the first uplink resource and the second uplink resource.

17. The method of determining a timing advance according to any one of claims 11 to 16, wherein in the first uplink resource, a subcarrier spacing of downlink transmission is less than or equal to a subcarrier spacing of uplink transmission.

18. The method of determining a timing advance according to claim 17, wherein
configuring pairs of uplink and downlink resources for a terminal by the network device according to a BWP pair, wherein the BWP pair comprises a first bandwidth BWP where the uplink transmission is located and a second BWP where the downlink transmission is located, wherein a subcarrier spacing of the second BWP is less than or equal to a subcarrier spacing of the first BWP; or
configuring pairs of uplink and downlink resources for a terminal by the network device according to a subband pair, wherein the subband pair comprises: a first subband where the uplink transmission is located and a second subband where the downlink transmission is located, wherein a subcarrier spacing of the second subband is less than or equal to a subcarrier spacing of the first subband.

19. A terminal, comprising: a transceiver, a memory, a processor, and a computer program stored on the memory and executable on the processor, wherein the processor is configured to read a program in a memory and perform the following processes:
determining a target timing advance offset;
determining a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink subband, and the second uplink resource is a full-uplink slot or symbol in a bandwidth part (BWP) carrier/frequency band range.

20. The terminal according to claim 19, wherein the processor is further configured to read the computer program in the memory to perform the following process:
determining the first TA amount and the second TA amount according to the target timing advance offset and according to a timing advance command sent by the network device.

21. The terminal according to claim 20, wherein the target timing advance offset comprises:
a first offset and a second offset, wherein the first offset is used to determine the first TA amount, and the second offset is used to determine the second TA amount; or
a third offset, wherein the third offset is used to determine the first TA amount and the second TA amount.

22. The terminal according to claim 21, wherein the first offset is less than or equal to a cyclic prefix length; or the first offset is equal to 0.

23. The terminal according to claim 21, wherein in a case that the target timing advance offset comprises the third offset, the processor is further configured to read the computer program in the memory to perform the following process:
determining the first TA amount according to the third offset, the timing advance command, and a first determining manner;
determining the second TA amount according to the third offset, the timing advance command, and a second determining manner.

24. The terminal according to claim 23, wherein
when the third offset is non-zero, the first determination manner is *T*_{*TA_*1} *= N*_{*TA_*1} × *T_{c}*, and the second determination manner is *T*_{*TA_*2} *=* (*N*_{*TA_*1} *+ N*_{*TA,offset_*3}) × *T_{c}*;
or,
when the third offset is zero, the first determination manner is *T*_{*TA_*1} *=* (*N*_{*TA_*2} *- N*_{*TA,offset_*3}) × *T_{c},* and the second determination manner is *T*_{*TA*_2} *= N*_{*TA_*2} × *T_{c}*;
wherein *T*_{*TA_*1} is the first TA amount, *T*_{*TA_*2} is the second TA amount, *N*_{*TA*_1} and *N*_{*TA_*2} are adjustment parameters determined according to the timing advance command, *T_{c}* is a basic time unit, and *N*_{*TA,offset_*3} is the third offset.

25. The terminal according to claim 22, wherein a guard interval between the first uplink resource and the second uplink resource is greater than or equal to a first value, and the first value = (*N*_{*TA,offset_*2} *- N*_{*TA,offset_*1}) × *T_{c};*
wherein *N*_{*TA,offset_*1} is the first offset, *N*_{*TA,ottset*_2} is the second offset, and *T_{c}* is a basic time unit.

26. The terminal according to claim 25, wherein
the guard interval is a predefined guard interval in a frame format; or
the guard interval is a predefined quantity of symbols; or
the guard interval is a quantity of symbols associated with a subcarrier; or
the guard interval is at least a part of a first time length, and the first time length is a flexible slot or a flexible symbol between the first uplink resource and the second uplink resource; or
the guard interval is at least a part of a second time length, and the second time length is a time length between the first uplink resource and the second uplink resource.

27. The terminal according to any one of claims 19 to 26, wherein in the first uplink resource, a subcarrier spacing of downlink transmission is less than or equal to a subcarrier spacing of uplink transmission.

28. The terminal according to claim 27, wherein the processor is further configured to read the computer program in the memory to perform the following process:
switching between pairs of uplink and downlink resource configurations according to a BWP pair or a subband pair;
wherein the BWP pair comprises a first bandwidth part BWP where the uplink transmission is located and a second BWP where the downlink transmission is located, wherein a subcarrier spacing of the second BWP is less than or equal to a subcarrier spacing of the first BWP;
the subband pair comprises: a first subband where the uplink transmission is located and a second subband where the downlink transmission is located, wherein a subcarrier spacing of the second subband is less than or equal to a subcarrier spacing of the first subband.

29. A network device, comprising:
a transceiver, a memory, a processor, and a computer program stored on the memory and executable on the processor, wherein the processor is configured to read the computer program in a memory and perform the following processes:
determining a target timing advance offset;
wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink subband, and the second uplink resource is a full-uplink slot or a symbol in a BWP/carrier/frequency band range.

30. The network device according to claim 29, wherein the target timing advance offset comprises:
a first offset and a second offset, wherein the first offset is used to determine a timing advance offset for receiving uplink transmission on the first uplink resource, and the second offset is used to determine a timing advance offset for receiving uplink transmission on the second uplink resource;
or,
a third offset, wherein the third offset is used to determine a timing advance offset for receiving uplink transmission on the first uplink resource and a timing advance offset for receiving uplink transmission on the second uplink resource.

31. The network device according to claim 30, wherein the first offset is less than or equal to a cyclic prefix length; or the first offset is equal to 0.

32. The network device according to claim 30, wherein
when the third offset is non-zero, the timing advance amount indicated by the timing advance command does not comprise a timing advance offset;
when the third offset is zero, the timing advance amount indicated by the timing advance command comprises a timing advance offset.

33. The network device according to claim 31, wherein a guard interval between the first uplink resource and the second uplink resource is greater than or equal to a first value, and the first value *=*(*N*_{*TA,offset*_2} *- N*_{*TA,offset*_1}) × *T_{c};*
wherein *N*_{*TA,offset_*1} is the first offset, *N*_{*TA,ottset*_2} is the second offset, and *T_{c}* is a basic time unit.

34. The network device according to claim 33, wherein
the guard interval is a predefined guard interval in a frame format; or
the guard interval is a predefined quantity of symbols; or
the guard interval is a quantity of symbols associated with a subcarrier; or
the guard interval is at least a part of a first time length, and the first time length is a flexible slot or a flexible symbol between the first uplink resource and the second uplink resource; or
the guard interval is at least a part of a second time length, and the second time length is a time length between the first uplink resource and the second uplink resource.

35. The network device according to any one of claims 29 to 34, wherein in the first uplink resource, a subcarrier spacing of downlink transmission is less than or equal to a subcarrier spacing of uplink transmission.

36. The network device according to claim 35, wherein the processor is further configured to read the computer program in the memory to perform the following process:
configuring pairs of uplink and downlink resources for a terminal by the network device according to a BWP pair, wherein the BWP pair comprises a first bandwidth part BWP where the uplink transmission is located and a second BWP where the downlink transmission is located, wherein a subcarrier spacing of the second BWP is less than or equal to a subcarrier spacing of the first BWP; or
configuring pairs of uplink and downlink resources for a terminal by the network device according to a subband pair, wherein the subband pair comprises: a first subband where the uplink transmission is located and a second subband where the downlink transmission is located, wherein a subcarrier spacing of the second subband is less than or equal to a subcarrier spacing of the first subband.

37. An apparatus for determining a timing advance, the apparatus being applied to a terminal, and the apparatus comprising:
a first determining module, configured to determine a target timing advance offset;
a second determining module, configured to determine a first timing advance (TA) amount and a second TA amount according to the target timing advance offset, wherein the first TA amount is used for uplink transmission on a first uplink resource, and the second TA amount is used for uplink transmission on a second uplink resource; and the first uplink resource is a slot or symbol for an uplink subband, and the second uplink resource is a full-uplink slot or symbol in a bandwidth part (BWP) carrier/frequency band range.

38. An apparatus for determining a timing advance, the apparatus being applied to a network device, and the apparatus comprising:
a third determining module, configured to determine a target timing advance offset;
wherein the target timing advance offset is used to determine a timing advance offset for receiving uplink transmission on a first uplink resource and a timing advance offset for receiving uplink transmission on a second uplink resource, wherein the first uplink resource is a slot or symbol for an uplink subband, and the second uplink resource is a full-uplink slot or a symbol in a BWP/carrier/frequency band range.

39. A processor-readable storage medium, wherein the processor-readable storage medium stores a computer program, and the computer program is configured to cause a processor to perform the method of determining a timing advance according to any one of claims 1 to 10, or perform the method of determining a timing advance according to any one of claims 11 to 18.
